# EUROPÄISCHE PATENTSCHRIFT

(11) **EP 1 604 176 B1**
(45) Veröffentlichungstag und Bekanntmachung des Hinweises auf die Patenterteilung: **14.09.2016**
(21) Anmeldenummer: 04720880.6
(22) Anmeldetag: 16.03.2004
(51) Int. Cl.: G01F 1/66

(54) **VORRICHTUNG ZUR BESTIMMUNG UND/ODER ÜBERWACHUNG DES VOLUMEN- UND/ODER MASSENDURCHFLUSSES EINES MEDIUMS**
DEVICE FOR DETERMINING AND/OR MONITORING THE VOLUME AND/OR MASS FLOW RATE OF A MEDIUM
DISPOSITIF POUR DETERMINER ET/OU SURVEILLER LE DEBIT VOLUMIQUE ET/OU MASSIQUE D'UN MILIEU

(30) Priorität: 17.03.2003 DE 10311878
(43) Veröffentlichungstag der Anmeldung: 14.12.2005
(73) Patentinhaber: Endress + Hauser Flowtec AG, 4153 Reinach (CH)
(72) Erfinder: FRÖHLICH, Thomas, CH-4142 Münchenstein (CH); BERGER, Andreas, CH-4153 Reinach (CH); BUSSINGER, Klaus, CH-4153 Reinach (CH)
(74) Vertreter: Andres, Angelika Maria
(86) Internationale Anmeldenummer: PCT/EP2004/002746
(87) Internationale Veröffentlichungsnummer: WO 2004/083784

(56) Entgegenhaltungen:
- EP-A- 0 446 023
- DE-A- 19 617 961
- DE-B- 1 094 471
- US-A- 4 312 238
- US-B1- 6 354 146

## Beschreibung

Die Erfindung bezieht sich auf eine Vorrichtung zur Bestimmung und/oder Überwachung des Volumen- und/oder Massendurchflusses eines Mediums, das ein Behältnis in einer Strömungsrichtung durchfließt, mit zumindest einem Ultraschallsensor, der Ultraschall-Meßsignale aussendet und/oder empfängt, und mit einer Regel-/Auswerteeinheit, die den Volumen- und/oder den Massendurchfluß des Mediums in dem Behältnis anhand der Ultraschall-Meßsignale ermittelt.

Ultraschall-Durchflußmeßgeräte werden vielfach in der Prozeß- und Automatisierungstechnik eingesetzt. Sie erlauben es, den Volumen- und/oder Massedurchfluß eines Mediums in einer Rohrleitung zu bestimmen.

Die bekannten Ultraschall-Durchflußmeßgeräte arbeiten entweder nach dem Doppler-Prinzip oder nach dem Laufzeitdifferenz-Prinzip. Beim Laufzeitdifferenz-Prinzip wird die unterschiedliche Laufzeit von Ultraschall-Meßsignalen in Strömungsrichtung und entgegen der Strömungsrichtung des Mediums ausgewertet. Hierzu werden die Ultraschall-Meßsignale von den Ultraschallsensoren wechselweise in Strömungsrichtung und entgegen der Strömungsrichtung des Mediums ausgesendet bzw. empfangen. Aus der Laufzeitdifferenz der Ultraschall-Meßsignale läßt sich die Fließgeschwindigkeit und damit bei bekanntem Durchmesser der Rohrleitung der Volumendurchfluß bzw. bei bekannter oder gemessener Dichte des Mediums der Massendurchfluß bestimmen.

Beim Doppler-Prinzip werden Ultraschall-Meßsignale mit einer vorgegebenen Frequenz in das strömende Medium eingekoppelt. Die in dem Medium reflektierten Ultraschall-Meßsignale werden ausgewertet. Anhand einer zwischen dem eingekoppelten und dem reflektierten Ultraschall-Meßsignal auftretenden Frequenzverschiebung läßt sich ebenfalls die Fließgeschwindigkeit des Mediums bzw. der Volumen und/oder Massedurchfluß bestimmen.

Der Einsatz von Durchflußmeßgeräten, die nach dem Doppler-Prinzip arbeiten, ist nur möglich, wenn in dem Medium Luftbläschen oder Verunreinigungen vorhanden sind, an denen die Ultraschall-Meßsignale reflektiert werden. Damit ist der Einsatz derartiger Ultraschall-Durchflußmeßgeräte im Vergleich zu den Ultraschall-Durchflußmeßgeräten, die nach dem Laufzeitdifferenz-Prinzip arbeiten, ziemlich eingeschränkt.

Hinsichtlich der Typen von Meßgeräten wird unterschieden zwischen Ultraschall-Durchflußmeßaufnehmern, die in die Rohrleitung eingesetzt werden, und Clamp-On Durchflußmeßgeräten, bei denen die Ultraschallsensoren von außen an die Rohrleitung mittels eines Spannverschlusses angepreßt werden. Clamp-On Durchflußmeßgeräte sind beispielsweise in der EP 0 686 255 B1, der US-PS 4,484,478 oder der US-PS 4,598,593 beschrieben.

Bei beiden Typen von Ultraschall-Durchflußmeßgeräten werden die Ultraschall-Meßsignale unter einem vorgegebenen Winkel in die Rohrleitung bzw. in das Meßrohr, in der bzw. in dem sich das strömende Medium befindet, eingestrahlt und/oder empfangen. Um eine optimale Impedanzanpassung zu erreichen, werden die Ultraschall-Meßsignale über einen Vorlaufkörper bzw. einen Koppelkeil in die Rohrleitung/in das Meßrohr eingekoppelt bzw. aus der Rohrleitung / aus dem Meßrohr ausgekoppelt. Hauptbestandteil eines Ultraschallsensors ist zumindest ein piezoelektrisches Element, welches die Ultraschall-Meßsignale in einem definierten Frequenzbereich erzeugt und/oder empfängt.

Die in einem piezoelektrischen Element erzeugten Ultraschall-Meßsignale werden über den Koppelkeil bzw. einen Vorlaufkörper und - im Falle eine Clamp-On Durchflußmeßgeräts - über die Rohrwand in das flüssige oder gasförmige Medium geleitet. Da die Schallgeschwindigkeit materialabhängig ist, werden die Ultraschall-Meßsignale jeweils beim Übergang von einem Medium in das andere gebrochen. Der Brechungswinkel selbst bestimmt sich nach dem Snellius Gesetz, d.h der Brechungswinkel ist abhängig von dem Verhältnis der Ausbreitungsgeschwindigkeiten von jeweils zwei Medien, die von dem Ultraschall-Meßsignal sukzessive durchlaufen werden.

Bekannt geworden sind Ultraschall-Durchflußmeßgeräte, die entweder für die Messung des Volumenstroms / des Massenstroms von Gasen oder von Flüssigkeiten ausgebildet sind. Erforderlich ist diese Differenzierung der Ultraschall-Durchflußmeßgeräte aufgrund des folgenden Sachverhalts: Die Meßgenauigkeit eines Ultraschall-Durchflußmeßgeräts ist - was insbesondere bei kleinen Meßstrecken von großer Wichtigkeit ist - um so größer, je höher die Frequenz der Ultraschall-Meßsignale ist. Insbesondere bei der Messung des Volumenstroms / Massestroms von Gasen ist der Einsatz von Ultraschall-Meßsignalen mit hohen Frequenzen jedoch ab gewissen Grenzfrequenzen prinzipiell unmöglich: Bei Gasen nimmt die Dämpfung der Ultraschall-Meßsignalen mit steigender Frequenz so stark zu, daß letztlich überhaupt kein Meßsignal mehr detektiert werden kann. Um die Dämpfungsverluste gering zu halten, werden zur Messung von gasförmigen Medien Ultraschall-Meßsignale mit einer Frequenzbandbreite von ca. 50kHz bis maximal 1 MHz eingesetzt, während zur Messung des Volumenstroms/ Massestroms von Flüssigkeiten die typische Frequenzbandbreite zwischen 300kHz bis 10MHz liegt.

Bei bekannten Ultraschall-Durchflußmeßgeräten ist die Frequenzbandbreite durch zumindest ein Filter begrenzt, welches niederfrequente und hochfrequente Störsignale unterdrückt. Das Filter läßt nur eine relativ schmale Frequenzbandbreite durch, in der die Regel-/Auswerteeinheit, insbesondere die Elektronik die Ultraschall-Meßsignale aussendet bzw. empfängt. Um eine optimale Störunterdrückung zu erreichen, ist es unbedingt erforderlich, das Empfangsfilter an die Nutzfrequenz anzupassen. Um hier brauchbare Meßergebnisse zu erzielen, wurden bislang Durchflußmeßgeräte eingesetzt, die speziell auf eine Gas- oder eine Flüssigkeitsmessung abgestimmt waren. Kombigeräte aus den Dokumenten DE 10 94 471 B, US 6 354 146 B1 oder EP 0 446 023 A bekannt. Das Dokument DE 10 94 471 B offenbart eine Ultraschalldurchflussmessvorrichtung gemäß dem Oberbegriff von Anspruch 1.

Der Erfindung liegt die Aufgabe zugrunde, ein alternatives universell einsetzbares
Ultraschall-Durchfiußmeßgerät vorzuschlagen, das sowohl zur Messung von gasförmigen als auch von flüssigen Medien geeignet ist.

Die Aufgabe wird durch die Merkmale des kennzeichnenden Teils von Anspruch 1 gelöst.

Desweiteren kann das erfindungsgemäße Durchflußmeßgerät als Inline- oder als Clamp-On-Durchflußmeßgerät ausgestallet ist.

Die erfindungsgemäße Vorrichtung ist bei den unterschiedlichen Anwendungsfällen im Bereich der Volumendurchfluß- bzw. der Massedurchflußmessung einsetzbar. Im Falle einer Ein-Kanal-Ultraschall-Verstärker-elektronik (d.h. eine Regel-/Auswerteeinheit bzw. eine Elektronik wird in Verbindung mit einem Meßaufnehmer eingesetzt) ist es somit möglich, je nach Anwendungsfall sowohl gasförmige als auch flüssige Medien zu messen, ohne daß eine Auswahl der Verstärkerelektronik vorab notwendig ist. Der Anwender kann das Meßgerät nachträglich in einfacher Weise an den jeweiligen Anwendungsfall anpassen. Damit ist die erfindungsgemäße Vorrichtung universell für die unterschiedlichen Anwendungen nutzbar. Gegebenenfalls muß bei der erfindungsgemäßen Lösung lediglich der Ultraschallsensor bzw. müssen lediglich die Ultraschallsensoren ausgetauscht werden. Eine Umschaltung zwischen den einzelnen Meßanwendungen erfolgt z. B. per Knopfdruck.

Bei einer Zwei-Kanal-Ultraschall-Verstärkerelektronik (d.h. eine Regel-/Auswerteeinheit bzw. eine Elektronik kann zwei Meßaufnehmer bedienen) ist es mit der erfindungsgemäßen Lösung beispielsweise möglich, einen Meßaufnehmer mit niederfrequenten (Gas-) Ultraschallsensoren und den zweiten Meßaufnehmer mit hochfrequenten (Flüssigkeits-) Ultraschallsensoren auszustatten; je nach Medium wird dann der erste oder der zweite Meßkanal aktiviert.

Gemäß der erfindungsgemäßen Vorrichtung ist vorgesehen, daß der Regel-/Auswerteeinheit ein erstes Bandpaßfilter mit einem ersten Frequenzbereich und ein zweites Bandpaßfilter mit einem zweiten Frequenzbereich zugeordnet ist, wobei das erste Bandpaßfilter geringere Grenzfrequenzen aufweist als das zweite Bandpaßfilter. Das erste Bandpaßfilter wird bei Gasanwendungen aktiviert, während das zweite Bandpaßfilter bei Messungen des Volumenstroms / Massenstroms in Flüssigkeiten aktiviert wird.

Zwecks Aktivierung bzw. Deaktivierung des ersten Bandpaßfilters bzw. des zweiten Bandpaßfilters ist jeweils zumindest ein Schaltelement vorgesehen, über das das gewünschte Bandpaßfilter zuschaltbar bzw. ausschaltbar ist. Beispielsweise ist ein Schaltelement vor oder es ist jeweils ein Schaltelement vor und ein Schaltelement nach jedem Filter plaziert. Die Ansteuerung der Schaltelemente erfolgt bevorzugt über den Mikroprozessor, der auch die Auswertung der Ultraschall-Meßsignale vornimmt. Bei niederfrequenten Anwendungen, also bei der Messung des Volumenstroms / Massestroms von Gasen, wird der Pfad für das Bandpaßfilter für den niedrigeren Frequenzbereich aktivert; bei der Messung des Volumenstroms/ Massestroms von Flüssigkeiten wird das Bandpaßfilter für den höheren Frequenzbereich freigegeben.

Eine Ausgestaltung der erfindungsgemäßen Vorrichtung schlägt einen ersten A/D-Wandler vor, der dem jeweils zugeschalteten Bandpaßfilter zugeordnet ist. Günstig ist es, wenn die Abtastrate dieses ersten A/D-Wandlers in Abhängigkeit von der Bandbreite des jeweils zugeschalteten Bandpaßfilters eingestellt ist bzw. einstellbar ist. Hierdurch ist es möglich, insbesondere bei gasförmigen Medien die Meßrate zu reduzieren und somit die zwecks Meßwertbereitstellung zu verarbeitende Datenmenge zu minimieren.

Eine alternative Ausgestaltung der erfindungsgemäßen Vorrichtung schlägt vor, daß anstelle der A/D-Wandlung und der digitalen Signalverarbeitung zur Bestimmung der Zeitdifferenz zwischen dem gesendeten und empfangenen Ultraschall-Meßsignal in und entgegen der Strömungsrichtung des Mediums zumindest ein TDC-Baustein, also ein Time-to-Digital Converter, eingesetzt wird. Lösungen, bei denen TDCs zum Einsatz kommen, sind relativ kostengünstig. Auch läßt sich mit diesen Bausteinen der Rechenaufwand und damit die Rechenzeit minimieren.

Gemäß einer bevorzugten Ausgestaltung der erfindungsgemäßen Vorrichtung ist ein erster Mikroprozessor vorgesehen, der anhand der vom A/D-Wandler oder vom TDC-Baustein gelierferten Meßdaten den Volumen- und/oder den Massedurchfluß des Mediums in dem Behältnis bestimmt. Der Mikroprozessor und der A/D-Wandler bzw. der TDC-Baustein können selbstverständlich auch als integrierte Bausteine ausgebildet sein.

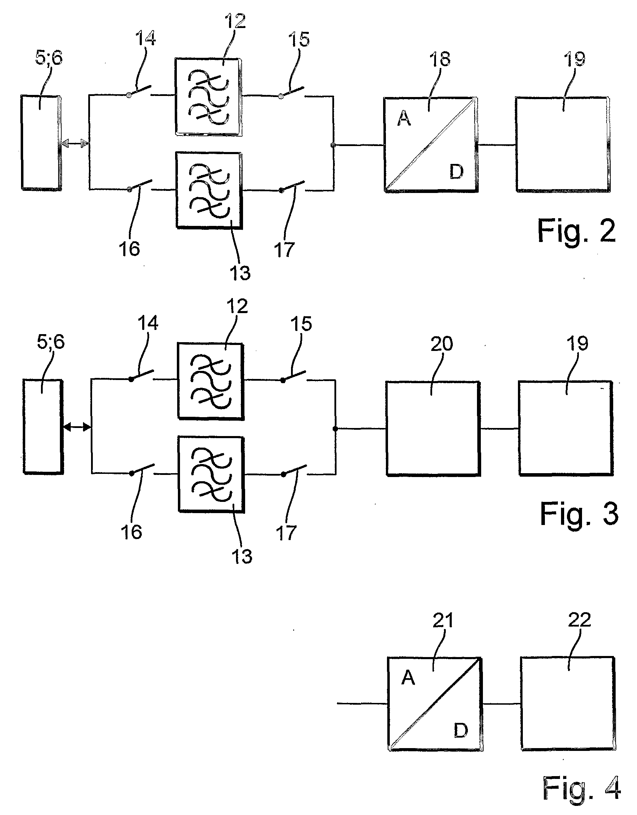

Bei einer kostengünstigen und sehr flexibel zu handhabenden alternativen Ausgestaltung der erfindungsgemäßen Vorrichtung ist ein zweiter A/D-Wandler und ein zweiter Mikroprozessor vorgesehen, wobei die Ultraschall-Meßsignale in dem A/D-Wandler digitalisiert werden und wobei der zweite Mikroprozessor die digitalisierten Meßdaten über ein Digitalfilter führt, dessen Frequenzbereich auf das zu detektierende Medium abgestimmt ist bzw. abstimmbar ist. Hier erfolgt die Filterung der Daten nicht vor der A/D-Wandlung (wie in den Ausführungsbeispielen der Figuren Fig. 2 und Fig. 3), sondern erst dann, wenn die Daten bereits in digitaler Form vorliegen. Die verwendeten Digitalfilter werden dann entsprechend der Frequenz des eigentlichen Ultraschall-Nutzsignals dimensioniert. Die analoge Filterstufe kann bei dieser Lösung entfallen.

Die Erfindung wird anhand der nachfolgenden Zeichnungen näher erläutert. Es zeigt:
Fig. 1: eine schematische Darstellung einer Ausgestaltung des erfindungsgemäßen Ultraschall-Durchflußmeßgeräts,
Fig. 2: ein Blockschaltbild einer ersten Ausgestaltung der Regel-/Auswerteeinheit,
Fig. 3: ein Blockschaltbild einer zweiten Ausgestaltung der Regel-/Auswerteeinheit und
Fig. 4: ein Blockschaltbild einer dritten Ausgestaltung der Regel-/Auswerteeinheit.

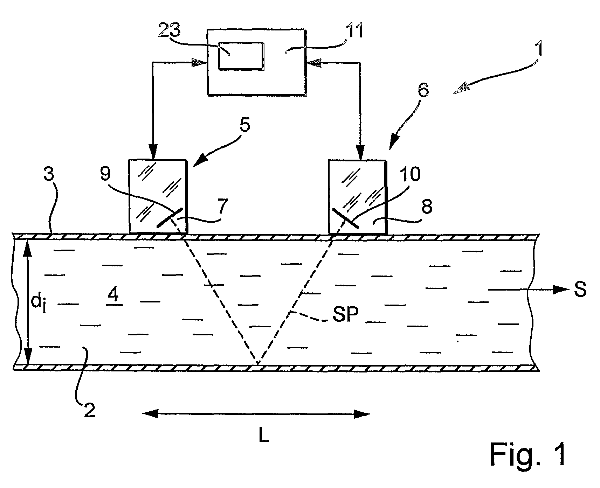

Fig. 1 zeigt eine schematische Darstellung einer Ausgestaltung des erfindungsgemäßen Ultraschall-Durchflußmeßgeräts 1. Bei dem Meßgerät 1 handelt es sich im gezeigten Fall um ein Clamp-On Durchflußmeßgerät. Das Meßgerät 1 ermittelt den Volumendurchfluß bzw. den Massendurchfluß des Mediums 4 durch das Rohr 2 nach der bekannten Laufzeitdifferenz-Methode.

Wesentliche Komponenten des Clamp-On Ultraschall-Durchflußmeßgeräts 1 sind die beiden Ultraschallwandler 5, 6 und die Regel-/Auswerteeinheit 11. Die beiden Ultraschallwandler 5, 6 sind mittels einer in der Fig. 1 nicht gesondert dargestellten Befestigungsvorrichtung in einem Abstand L voneinander an dem Rohr 2 angebracht. Entsprechende Befestigungsvorrichtungen sind aus dem Stand der Technik hinlänglich bekannt und werden auch von der Anmelderin angeboten und vertrieben. Das Rohr 2 mit dem Innendurch-messer *di* wird von dem Medium 4 in Strömungsrichtung S durchströmt. Bei dem Medium 4 kann es sich um ein Gas oder um eine Flüssigkeit handeln.

Ein Ultraschallwandler 5; 6 weist als wesentlichen Bestandteil zumindest ein piezoelektrisches Element 9; 10 auf, das die Ultraschall-Meßsignale erzeugt und/oder empfängt. Die Ultraschall-Meßsignale werden über den Koppelkeil 7; 8 in das vom Medium 4 durchströmte Rohr 2 eingekoppelt bzw. aus dem Rohr 2 ausgekoppelt. Ein Koppelkeil 7; 8 ist in bekannter Weise so ausgestaltet, daß sich eine möglichst gute Impedanzanpassunga beim Übergang von einem Medium in das andere realisieren läßt. Mit SP ist übrigens der Schallpfad gekennzeichnet, auf dem sich die Ultraschall-Meßsignale in dem Rohr 2 bzw. in dem Medium 4 ausbreiten. Im gezeigten Fall handelt es sich um eine sog. Zwei-Traversenanordnung der Ultraschallwandler 5, 6. Eine Traverse kennzeichnet dabei den Teilbereich des Schallpfades SP, auf dem ein Ultraschall-Meßsignal den Behälter 2 einmal quert. Die Traversen können je nach Anordnung der Ultraschallwandler 5, 6 und ggf. unter Einfügen eines Reflektorelements in den Schallpfad SP diametral oder chordial verlaufen.

Der Abstand L der beiden Ultraschallwandler 5, 6 ist möglichst so bemessen, daß ein großer Anteil der von dem jeweils einen Ultraschallwandler 5; 6 in das Rohr 2 eingestrahlten Energie von dem jeweils anderen Ultraschallwandler 6; 5 empfangen wird.

In den Figuren Fig. 2 bis Fig. 4 sind unterschiedliche Ausgestaltungen der Regel-/Auswerteinheit 11 dargestellt, die in Verbindung mit der erfindungsgemäßen Vorrichtung 1 zur Anwendung kommen können.

Bei der in Fig. 2 gezeigten Ausgestaltung werden die Ultraschall-Meßsignale auf den Eingang der Regel-/Auswerteeinheit 11 gegeben. Im Falle von flüssigen Medien werden die beiden oberen Schaltelemente 14, 15 geschlossen und die beiden unteren Schaltelemente 16, 17 geöffnet. Die Ansteuerung der Schaltelemente 14, 15, 16, 17 erfolgt bevorzugt über den Mikroprozessor 19. Bei dieser Beschaltung kommt das obere Bandpaßfilter 12 mit der höheren Grenzfrequen zum Einsatz. Im Falle von gasförmigen Medien werden die beiden oberen Schaltelemente 14, 15 geöffnet und die beiden unteren Schaltelemente 16, 17 geschlossen. Nun ist das untere Bandpaßfilter 13 mit der niedrigeren Grenzfrequenz aktiviert. Nachdem die Ultraschall-Meßsignale in Abhängigkeit von dem zu messenden Medium 4 gefiltert sind, wird das gefilterte Ultraschall-Meßsignal - wie aus dem Stand der Technik bestens bekannt - über den A/D-Wandler 18 von einem analogen Signal in ein digitales Signal umgewandelt und von dem Mikroprozessor 19 weiterverarbeitet und ausgewertet. Die Umschaltung des Durchflußmeßgeräts 1 zwischen den beiden möglichen Meßmodi erfolgt beispielsweise durch Betätigen einer Taste 23, die an der Regel-/Auswerteeinheit 11 vorgesehen ist. Anzumerken bleibt, daß die Bandpaßfilter 12, 13 üblicherweise auch die Meßsignale mit einem vorgegebenen oder einstellbaren Verstärkungsfaktor verstärken.

Von dem in Fig. 2 gezeigten Blockschaltbild unterscheidet sich das in Fig. 3 dargestellte Blockschaltbild lediglich durch den TDC-Baustein 20, der den in Fig 2 gezeigten A-/D-Wandler 18 ersetzt. Wie bereits gesagt, ist es mit einem TDC-Baustein 20 direkt möglich, Laufzeitzeiten und damit auch Laufzeitdifferenzen zwischen zwei Ultraschall-Meßsignalen zu bestimmen. Aufgrund der einfacheren Auswertung der Meßsignale bei Verwendung eines TDC-Bausteins ist bei dieser Ausgestaltung die Programmierung des Mikroprozessors 19 relativ einfach; desweiteren ist der Rechenaufwand und damit die Rechenzeit des Mikroprozessors 19 erheblich reduziert.

In Fig. 4 ist eine besonders einfache und kostengünstige Ausgestaltung der Regel-/Auswerteeinheit 11 dargestellt. Die von den Ultraschallsensoren 5; 6 gelieferten Ultraschall-Meßsignale werden möglichst breitbandig verstärkt. Die verstärkten Ultraschall-Meßsiganle werden in dem A/D-Wandler 21 digitalisiert. Anschließend werden die digitalisierten Daten je nach Applikationsfall über ein Digitalfilter geführt. Das Digitalfilter ist jeweils entsprechend der Frequenz des Ultraschall-Meßsignals dimensioniert. Die Auswertung der Daten erfolgt in dem Mikroporzessor 22. Aufgrund der digitalen Filterung können bei dieser Ausgestaltung der Regel-/Auswerteeinheit 11 die analogen Filter 12, 13 entfallen, wodurch eine relativ kostengünstige und flexibel handhabbare Schaltung bereitgestellt wird.

### Besugszeichenliste

- 1: Durchflußmeßgerät
- 2: Rohr/Behälnis
- 3: Rohrwand
- 4: Medium
- 5: Ultraschallsensor
- 6: Ultraschallsensor
- 7: Koppelkeil
- 8: Koppelkeil
- 9: Piezoelektrisches Element
- 10: Piezoelektrisches Element
- 11: Regel-/Auswerteeinheit
- 12: Erster Bandpaßfilter
- 13: Zweiter Bandpaßfilter
- 14: Schaltelement
- 15: Schaltelement
- 16: Schaltelement
- 17: Schaltelement
- 18: Erster A/D-Wandler
- 19: Erster Mikroprozessor
- 20: TDC-Baustein
- 21: Zweiter A/D-Wandler
- 22: Zweiter Mikorprozessor
- 23: Taste

## Patentansprüche

1. Vorrichtung zur Bestimmung und/oder Überwachung des Volumen- und/oder Massendurchflusses eines Mediums (4), das ein Behältnis (2) in einer Strömungsrichtung (S) durchfließt, mit zumindest einem Ultraschallsensor (5, 6) der Ultraschall-Meßsignale aussendet und/oder empfängt, und mit einer Regel-/Auswerteeinheit (11), die den Volumen- und/oder den Massendurchfluß des Mediums (4) in dem Behältnis (2) anhand der Ultraschall-Meßsignale ermittelt, wobei die Regel-/Auswerteeinheit (11) derart ausgestaltet ist, daß sie zumindest in einem ersten Frequenzbereich und in einem zweiten Frequenzbereich Ultraschall-Meßsignale aussendet, empfängt und auswertet, wobei der erste Frequenzbereich aktiviert ist bzw. aktivierbar ist, wenn es sich bei dem Medium (4) um ein gasförmiges Medium handelt und wobei der zweite Frequenzbereich aktiviert ist bzw. aktivierbar ist, wenn es sich bei dem Medium um ein flüssiges Medium handelt,
**dadurch gekennzeichnet,**
**daß** der Regel-/Auswerteeinheit (11) ein erstes Bandpaßfilter (12) mit einem ersten Frequenzbereich und ein zweites Bandpaßfilter (13) mit einem zweiten Frequenzbereich zugeordnet ist, wobei das erste Bandpaßfilter (12) geringere Grenzfrequenzen aufweist als das zweite Bandpaßfilter (13), wobei dem ersten Bandpaßfilter (12) zumindest ein erstes Schaltelement (14; 15) zugeordnet ist, über das der Bandpaßfilter (12) zuschaltbar bzw. ausschaltbar ist, und wobei dem zweiten Bandpaßfilter (13) zumindest ein zweites Schaltelement (16; 17) zugeordnet ist, über das der zweite Bandpaßfilter (13) zuschaltbar bzw. abschaltbar ist.

2. Vorrichtung nach Anspruch 1,
**dadurch gekennzeichnet,**
**daß** ein erster A/D-Wandler (18) vorgesehen ist, der dem jeweils zugeschalteten Bandpaßfilter (12; 13) zugeordnet ist.

3. Vorrichtung nach Anspruch 2,
**dadurch gekennzeichnet,**
**daß** die Abtastrate des ersten A/D-Wandlers (18) in Abhängigkeit von der Bandbreite des jeweils zugeschalteten Bandpaßfilters (12; 13) eingestellt ist bzw. einstellbar ist.

4. Vorrichtung nach Anspruch 2,
**dadurch gekennzeichnet,**
**daß** ein TDC-Baustein (20) vorgesehen ist, der die Laufzeiten und somit die Zeitdifferenz zwischen dem gesendeten Ultraschall-Meßsignals und des empfangenen Ultraschall-Meßsignals ermittelt.

5. Vorrichtung nach Anspruch 2, 3 oder 4,
**dadurch gekennzeichnet,**
**daß** ein erster Mikroprozessor (19) vorgesehen ist, der anhand der vom A/D-Wandler (18) oder vom TDC-Baustein (20) gelieferten Meßdaten den Volumen- und/oder den Massedurchfluß des Mediums (4) in dem Behältnis (2) bestimmt.

6. Vorrichtung nach Anspruch 1,
**dadurch gekennzeichnet,**
**daß** ein zweiter A/D-Wandler (21) und ein zweiter Mikroprozessor (22) vorgesehen sind, wobei die Ultraschall-Meßsignale in dem A/D-Wandler (21) digitalisiert werden und wobei der zweite Mikroprozessor (22) die digitalisierten Meßdaten über ein Digitalfilter führt, dessen Frequenzbereich auf das zu detektierende Medium (4) abgestimmt ist bzw. abstimmbar ist.

7. Vorrichtung nach Anspruch 1 oder 6,
**dadurch gekennzeichnet,**
**daß** die Regel-/Auswerteeinheit (11) den Volumen- und/oder den Massedurchfluß des Mediums (4) anhand der Laufzeitdifferenz von Ultraschall-Meßsignalen ermittelt, die das Medium (4) und/oder das Behältnis (2) in Strömungsrichtung und entgegen der Srömungsrichtung des Mediums (4) queren.

8. Vorrichtung nach Anspruch 1 oder 7,
**dadurch gekennzeichnet,**
**daß** die Vorrichtung (1) als Inline- oder als Clamp-On Durchflußmeßgerät ausgestaltet ist.

## Claims

1. Apparatus designed for determining and/or monitoring the volume flow and/or mass flow of a medium (4), which flows through a vessel (2) in a flow direction (S), with at least one ultrasonic sensor (5, 6) that emits and/or receives ultrasonic measuring signals, and with a control/evaluation unit (11) that determines the volume flow and/or the mass flow of the medium (4) in the vessel (2) using the ultrasonic measuring signals, wherein the control/evaluation unit (11) is designed in such a way that it emits, receives and evaluates ultrasonic measuring signals in a first frequency range and in a second frequency range, wherein the first frequency range is activated or activatable if the medium (4) is a gaseous medium and wherein the second frequency range is activated or activatable if the medium is a liquid medium,
**characterized in that**
a first bandpass filter (12) with a first frequency range and a second bandpass filter (13) with a second frequency range is assigned to the control/evaluation unit (11), wherein the first bandpass filter (12) has lower limit frequencies than the second bandpass filter (13), wherein at least a first switching element (14; 15) is assigned to the first bandpass filter (12) via said switching element the bandpass filter (12) can be activated or deactivated, and wherein at least a second switching element (16; 17) is assigned to the second bandpass filter (13) via said switching element the second bandpass filter (13) can be activated or deactivated.

2. Apparatus as claimed in Claim 1,
**characterized in that**
a first A/D converter (18) is provided which is assigned to the specific bandpass filter (12, 13) that is activated.

3. Apparatus as claimed in Claim 2,
**characterized in that**
the scanning frequency of the first A/D converter (18) is configured or configurable depending on the bandwidth of the specific bandpass filter (12, 13) that is activated.

4. Apparatus as claimed in Claim 2,
**characterized in that**
a TDC module (20) is provided that determines the times of flight and therefore the time difference between the transmitted ultrasonic measuring signal and the received ultrasonic measuring signal.

5. Apparatus as claimed in Claim 2, 3 or 4
**characterized in that**
a first microprocessor (19) is provided which uses the measurement data supplied by the A/D converter (18) or the TDC module (20) to determine the volume flow and/or the mass flow of the medium (4) in the vessel (2).

6. Apparatus as claimed in Claim 1
**characterized in that**
a second A/D converter (21) and a second microprocessor (22) are provided, wherein the ultrasonic measuring signals are digitized in the A/D converter (21) and wherein the second microprocessor (22) routes the digitized measurement data via a digital filter whose frequency range is aligned or alignable with the medium (4) to be detected.

7. Apparatus as claimed in Claim 1 or 6
**characterized in that**
the control/evaluation unit (11) determines the volume flow and/or mass flow of the medium (4) using the time of flight difference of ultrasonic measuring signals that pass through the medium (4) and/or the vessel (2) in the flow direction or against the flow direction of the medium (4).

8. Apparatus as claimed in Claim 1 or 7
**characterized in that**
the apparatus (1) is designed as an inline flowmeter or a clamp-on flowmeter.

## Revendications

1. Dispositif destiné à la détermination et/ou à la surveillance du débit volumique et/ou massique d'un produit (4), qui traverse un réservoir (2) dans un sens d'écoulement (S), avec au moins un capteur à ultrasons (5, 6), qui émet et/ou reçoit des signaux de mesure ultrasonores, et avec une unité de régulation / d'exploitation (11), qui détermine le débit volumique et/ou massique du produit (4) dans le réservoir (2) au moyen des signaux de mesure ultrasonores, l'unité de régulation / d'exploitation (11) étant conçue de telle sorte à émettre, recevoir et exploiter au moins dans une première gamme de fréquences et dans une deuxième gamme de fréquences des signaux de mesure ultrasonores, la première gamme de fréquences étant activée ou activable lorsque, concernant le produit (4), il s'agit d'un produit gazeux, et la deuxième gamme de fréquences étant activée ou activable lorsque, concernant le produit, il s'agit d'un produit liquide,
**caractérisé**
**en ce qu'**à l'unité de régulation / d'exploitation (11) est attribué un premier filtre passe-bande (12) avec une première gamme de fréquences et un deuxième filtre passe-bande (13) avec une deuxième gamme de fréquences, le premier filtre passe-bande (12) présentant des fréquences de coupure inférieures à celles du deuxième filtre passe-bande (13), au moins un premier élément de commutation (14, 15) étant attribué au premier filtre passe-bande (12), élément par l'intermédiaire duquel le filtre passe-bande (12) est activable ou désactivable, et au moins un deuxième élément de commutation (16, 17) étant attribué au deuxième filtre passe-bande (13), élément par l'intermédiaire duquel le deuxième filtre passe-bande (13) est activable ou désactivable.

2. Dispositif selon la revendication 1,
**caractérisé**
**en ce qu'**est prévu un premier convertisseur A/N (18), qui est attribué au filtre passe-bande (12, 13) activé.

3. Dispositif selon la revendication 2,
**caractérisé**
**en ce que** le taux d'échantillonnage du premier convertisseur A/N (18) est réglé ou réglable en fonction de la largeur de bande du filtre passe-bande (12, 13) activé.

4. Dispositif selon la revendication 2,
**caractérisé**
**en ce qu'**est prévu un module TDC (20), qui détermine les temps de propagation et, ainsi, la différence temporelle entre le signal de mesure ultrasonore émis et le signal de mesure ultrasonore reçu.

5. Dispositif selon la revendication 2, 3 ou 4,
**caractérisé**
**en ce qu'**est prévu un premier microprocesseur (19), qui détermine au moyen des données de mesure fournies par le convertisseur A/N (18) ou par le module TDC (20) le débit volumique et/ou massique du produit (4) dans le réservoir (2).

6. Dispositif selon la revendication 1,
**caractérisé**
**en ce que** sont prévus un deuxième convertisseur A/N (21) et un deuxième microprocesseur (22), les signaux de mesure ultrasonores étant numérisés dans le convertisseur A/N (21) et le deuxième microprocesseur (22) acheminant les données de mesure numérisées à travers un filtre numérique, dont la gamme de fréquences est accordée ou accordable sur le produit (4) à détecter.

7. Dispositif selon la revendication 1 ou 6,
**caractérisé**
**en ce que** l'unité de régulation / d'exploitation (11) détermine le débit volumique et/ou massique du produit (4) sur la base de la différence des temps de propagation de signaux de mesure ultrasonores, qui traversent le produit (4) et/ou le réservoir (2) dans le sens d'écoulement et dans le sens d'écoulement inverse du produit (4).

8. Dispositif selon la revendication 1 ou 7,
**caractérisé**
**en ce que** le dispositif (1) est conçu en tant que débitmètre en ligne ou clamp-on.
